# FASCICULE DE BREVET EUROPEEN

(11) **EP 0 592 289 B1**
(45) Date de publication et mention de la délivrance du brevet: **15.05.1996**
(21) Numéro de dépôt: 93402407.6
(22) Date de dépôt: 01.10.1993
(51) Int. Cl.: G21C 5/02, G21C 7/08, G21C 7/117

(54) **Equipements internes de réacteur nucléaire à colonnes entretoises et guides de grappe de commande**
Kernreaktoreinbauten mit Stützsäulen und Steuerstabbündelführungen
Nuclear reactor internals with support columns and control cluster guides

(30) Priorité: 05.10.1992 FR 9211763
(43) Date de publication de la demande: 13.04.1994
(73) Titulaire: FRAMATOME, F-92400 Courbevoie (FR)
(72) Inventeur: Bougis, Jean-Claude, F-92400 Courbevoie (FR)
(74) Mandataire: Fort, Jacques

(56) Documents cités:
- EP-A- 0 138 477
- EP-A- 0 329 536
- EP-A- 0 363 710
- EP-A- 0 428 433
- EP-A- 0 456 562
- EP-A- 0 467 093

## Description

La présente invention concerne les équipements internes supérieurs pour réacteur nucléaire et elle trouve une application particulièrement importante dans les réacteurs refroidis et modérés par de l'eau sous pression.

Elle concerne plus particulièrement les équipements internes surmontant le coeur d'un réacteur nucléaire, ayant une plaque inférieure percée d'ouvertures de sortie du réfrigérant hors du coeur, une plaque supérieure, des colonnes entretoises reliant les plaques, et des guides de grappe destinés à des grappes de commande déplaçables verticalement entre une position où elles sont insérées dans le coeur et une position où elles sont extraites de ce dernier, certains au moins de ces guides ayant chacun un tronçon supérieur faisant saillie au-dessus de la plaque supérieure et un tronçon inférieur s'étendant entre les plaques et placé dans une colonne entretoise respective.

Elle concerne plus particulièrement les équipements de ce genre dans lesquels le tronçon inférieur comporte une embase d'appui sur un siège tronconique solidaire de la plaque inférieure et est soumis à l'action de moyens élastiques exerçant une force appliquant l'embase sur le siège.

De tels équipements sont décrits dans le document EP-A-0 456 562. La présente invention vise notamment à fournir des équipements permettant une mise en place et un remplacement simple des guides de grappe placés dans des colonnes et un prémontage en atelier d'un ensemble que l'on peut ensuite directement rapporter sur la plaque supérieure.

Dans ce but l'invention propose des équipements du genre ci-dessus défini.

En règle générale, les deux tronçons comporteront plusieurs longerons verticaux (quatre par exemple) régulièrement répartis angulairement et reliant une plaque haute soumise à l'action des moyens élastiques et des plaques transversales de guidage des crayons de la grappe insérable dans le guide, ainsi que des fourreaux et tubes fendus de guidage continu des crayons dans la partie basse du tronçon inférieur. Les longerons ou membrures s'étendent donc jusqu'en haut de la cartouche. Ils peuvent s'interrompre à partir de la plaque transversale du tronçon inférieur où commencent les fourreaux et les tubes fendus du guidage continu ou ils peuvent se poursuivre jusqu'à une plaque transversale placée plus bas ou même jusqu'à l'embase.

L'invention sera mieux comprise à la lecture de la description qui suit de modes particuliers d'exécution, donnés à titre d'exemples non limitatifs. La description se réfère aux dessins qui l'accompagnent, dans lesquels :
- la figure 1 est une vue simplifiée, en coupe suivant un plan vertical, de la partie supérieure d'un réacteur auquel peut être appliquée l'invention ;
- la figure 2 est une vue en coupe suivant la ligne II-II des figures 3 à 5 montrant, à grande échelle, un dispositif de guidage suivant un mode de réalisation de l'invention applicable au réacteur de la figure 1 ;
- les figures 3 à 5 sont des vues en coupe suivant les lignes III-III, IV-IV et V-V de la figure 2 ;
- les figures 6 et 7 sont des vues de détail à grande échelle montrant deux constitutions possibles de la partie haute du guide de la figure 2 ;
- la figure 8, similaire à la figure 6, montre une variante de réalisation ;
- la figure 9 est une vue en coupe suivant la ligne IX-IX de la figure 8 ;
- la figure 10, similaire à la figure 8, montre une autre variante encore de réalisation ; et
- la figure 11 est un schéma illustrant une étape de montage de la cartouche d'un guide suivant les figures 8 et 9.

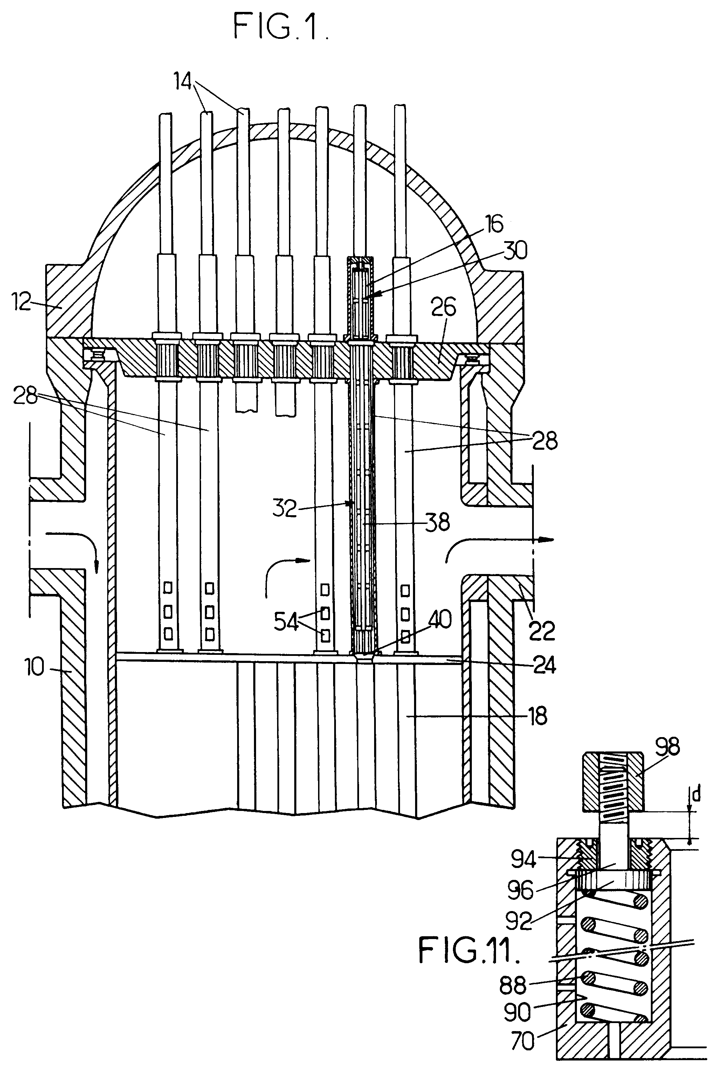

L'invention sera décrite, à titre d'exemple, dans son application à un réacteur à eau sous pression du genre montré en figure 1, qui comporte une cuve 10 de résistance à la pression de l'eau constituant réfrigérant et modérateur. La cuve est fermée par un couvercle 12 qui porte les mécanismes 14 de déplacement des grappes de commande dont une seule 16 est représentée. La cuve 10 contient le coeur 18, formé par juxtaposition d'assemblages ayant chacun un squelette et un faisceau de crayons combustibles répartis suivant un réseau régulier. Le squelette des assemblages comporte des tubes de guidage (non représentés) dans lesquels peuvent coulisser des crayons absorbants appartenant aux grappes de commande.

Le coeur est surmonté d'un ensemble, par exemple mécano-soudé, qu'on désigne par le terme d'équipements internes supérieurs. Cet ensemble remplit plusieurs fonctions. Il collecte le débit d'eau à haute température sortant du coeur vers le haut et le dévie vers la tubulure ou les tubulures 22 de sortie de la cuve 10. Il retient les assemblages combustibles du coeur 18. Enfin, il guide les grappes de commande 16 équipant cetains au moins des assemblages, au cours de leur déplacement vertical.

Les équipements internes supérieurs montrés en figure 1 comportent une plaque inférieure 24, qui reçoit la poussée des assemblages soumis à l'écoulement de l'eau sous pression, et une plaque supérieure 26 qui reporte la résultante des forces appliquées à l'ensemble des équipements internes supérieurs sur la cuve 10 et son couvercle 12. Les plaques 24 et 26 sont reliées par des colonnes entretoises 28 tubulaires.

Des guides de grappe sont prévus à la verticale de chaque mécanisme 14. Chaque guide de grappe peut être considéré comme comprenant un tronçon supérieur 30 et un tronçon inférieur 32. Les tronçons inférieurs 32 sont contenus dans des colonnes entretoises 28 correspondantes. Les tronçons supérieurs font saillie au-dessus de la plaque supérieure 26, qu'on peut regarder comme une plaque support des guides de grappe.

Les deux tronçons constituent une cartouche monolithique qui est insérable en bloc en la descendant dans une colonne. Cette cartouche a un squelette se terminant en bas par une embase 40 munie de moyens d'indexage destinés à donner au squelette une orientation angulaire déterminée dans la colonne.

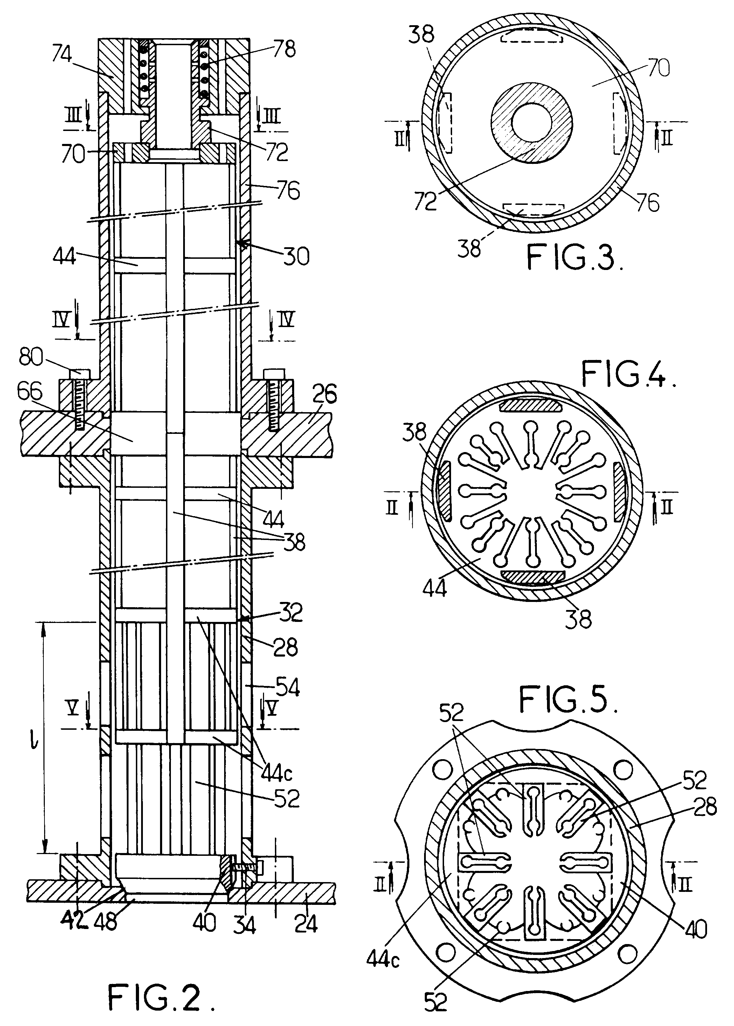

Dans le cas illustré sur la figure 2, les moyens d'indexage du tronçon inférieur forment un clavetage coulissant de l'embase 40 sur la colonne 28 et sont constitués par un pion 34 qui s'engage dans une rainure verticale de l'embase 40.

Le squelette montré, à titre d'exemple en figures 2 à 5, comprend :
- plusieurs longerons ou membrures verticaux 38, régulièrement répartis angulairement, au nombre de quatre par exemple,
- des plaques transversales 44 ou "cartes" régulièrement réparties, présentant une découpe correspondant à la répartition des crayons absorbants dans la grappe de commande et reliés par les longerons 38,
- des fourreaux et tubes fendus 52 de guidage des crayons de grappe, protégeant ces crayons contre l'écoulement de réfrigérant et se substituant aux longerons entre la plaque 44c la plus basse et l'embase 40.

L'embase 40 est prévue pour s'appliquer sur un siège ménagé sur la plaque inférieure 24 ou rapporté sur elle. La portée du siège et la surface d'appui de l'embase ont une forme telle qu'elles tendent à centrer l'embase dans la portée. En général la portée sera tronconique et la surface d'appui sera également tronconique ou en forme de calotte sphérique.

Dans le mode de réalisation illustré sur la figure 2, les fourreaux et tubes fendus 52 de guidage relient les deux plaques transversales 44c et l'embase 40. Ils guident de façon continue les crayons de grappe sur la longueur l. Le guidage des crayons est au contraire discontinu dans la partie du tronçon inférieur démunie de fourreaux et de tubes fendus, et dans le tronçon supérieur.

Toujours dans le mode de réalisation de l'invention montré en figure 2, chacune des colonnes support 28, disposée autour d'un tronçon inférieur 32, se termine par des brides dont l'une est fixée à la face tournée vers le bas de la plaque supérieure 26 et l'autre est fixée à la plaque inférieure 24, par exemple par des vis. Le réacteur est prévu pour que le réfrigérant sortant des assemblages traverse des passages 48 percés dans la plaque 24, chacun aligné avec un assemblage, et les embases 40, des ouvertures 54 ou ouïes sont ménagées à la partie basse des colonnes.

Les colonnes peuvent être fixées aux plaques 24 et 26 par tout procédé habituel. Elles peuvent par exemple être munies de brides qui s'appliquent contre les faces en regard des deux plaques et sont fixées par des vis non représentées.

Le tronçon supérieur 30 de chaque guide se termine par une plaque haute 70 fixée au longeron 38 et munie d'un centreur 72 en saillie vers le haut. Ce centreur peut prendre diverses constitutions. Il est destiné à s'engager dans une plaque de logement 74 appartenant à un capot 76 fixé à la plaque supérieure 26.

Le capot 76 entoure le tronçon supérieur 30. Dans le cas illustré sur la figure 2, il est centré sur la plaque 26 par une saillie annulaire et il est fixé sur cette plaque par des vis 80 traversant une bride inférieure du capot.

Le squelette peut comporter une bride ou une carte centreuse 66 destinée à centrer la cartouche dans le capot et la colonne au niveau de la plaque supérieure 26.

Les équipements internes comprennent encore des moyens élastiques destinés à appliquer chaque embase 40 sur son siège, qui peut entourer un passage respectif 48.

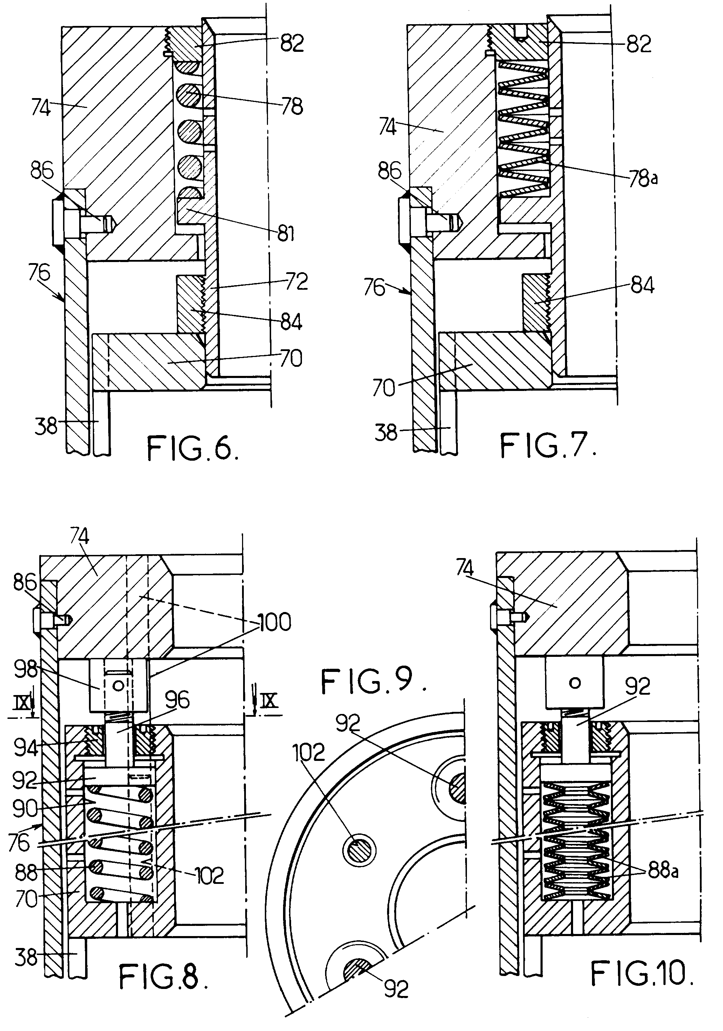

Dans le mode de réalisation représenté sur les figures 2 et 6, ces moyens élastiques comportent un ressort hélicoïdal unique 78, comprimé entre le centreur 72 et la plaque de logement 74. Le centreur 72 peut notamment être constitué par un fourreau présentant une collerette 81 d'appui du ressort 78, qui est emprisonné par un écrou 82 vissé dans la plaque de logement 74.

L'alésage central de l'anneau et la partie basse de la plaque de logement 74 guident alors le centreur.

Le niveau du centreur 72 par rapport à la plaque haute 70 peut être rendu ajustable. Dans le cas illustré sur la figure 6, l'appui du centreur 72 sur la plaque haute 70 est constitué par un anneau 84 vissé, de façon ajustable, sur un filetage du centreur dont l'extrémité s'engage à frottement doux dans un alésage de la plaque haute 70.

L'assemblage du dispositif est plus simple que celui de systèmes antérieurement connus.

La cartouche peut être montée complètement en atelier. Le centreur 72 peut lui-même être installé en atelier dans la plaque de logement 74. Cette dernière est alors fixée au reste du capot, par exemple par des pions 86 soudés. Sur le site la cartouche est mise en place. Le capot est mis en place, l'insertion du centreur dans la plaque haute 70 pouvant être facilitée par des chanfreins. Le capot est ensuite enfoncé en comprimant le ressort 78 par serrage des vis 80.

Les grappes de commande restent actionnées de façon classique par une tige traversant l'alésage central du centreur 72.

Le mode de réalisation montré en figure 7 (où les organes correspondant à ceux de la figure 6 sont désignés par le même numéro de référence) ne se différencie de celui de la figure 6 qu'en ce que le ressort hélicoïdal 78 est remplacé par un empilement de rondelles Belleville 78a.

Dans la variante de réalisation montrée en figures 8 et 9, les moyens élastiques comprennent plusieurs jeux identiques régulièrement répartis autour de l'axe du guide et intégrés dans la plaque haute 70, au nombre de trois par exemple. Chaque jeu comporte un ressort hélicoïdal 88 contenu dans une chambre 90 ménagée dans la plaque haute 70. Le ressort est comprimé entre le fond de la chambre et un plongeur 92 retenu par un bouchon 94. Le plongeur présente un prolongement 96 qui traverse le bouchon et qui est destiné à recevoir la poussée de la plaque de logement 74. Pour permettre de régler la force d'application exercée par les ressorts 88, la plaque 74 s'appuie sur le prolongement 96 par l'intermédiaire d'une tête filetée 98 vissée sur le prolongement.

Des broches de centrage 100 peuvent être emmanchées dans la plaque de logement 74 et coulisser dans des trous 102 de la plaque haute 70.

Le mode de réalisation montré en figure 10 ne se différencie du précédent que par le remplacement des ressorts hélicoïdaux 88 par des empilements de rondelles Belleville 88a.

Le montage des guides montré en figures 8 et 10 est aussi simple que celui des précédents. En atelier, les ressorts 88 sont placés dans les chambres 90. Les plongeurs 92 sont posés sur les ressorts. Les bouchons 94 sont mis en place pour fermer les chambres. Ils peuvent être prévus pour imposer une première précontrainte aux ressorts 88. Les écrous 98 sont mis en place et ajustés : leur distance d aux bouchons 94 fixe la course de compression des ressorts.

Une fois les cartouches complètement constituées, elles peuvent être mises en place en les introduisant dans les colonnes. Puis les capots sont installés et bloqués à l'aide de vis sur la plaque supérieure 26.

## Revendications

1. Equipements internes supérieurs pour réacteur nucléaire ayant une plaque inférieure (24) percée d'ouvertures de sortie du réfrigérant hors du coeur, une plaque supérieure (26), des colonnes entretoises (28) reliant les plaques, et des guides de grappe destinés à des grappes de commande déplaçables verticalement entre une position où elles sont insérées dans le coeur et une position où elles sont extraites de ce dernier, certains au moins de ces guides ayant chacun un tronçon supérieur (30) faisant saillie au-dessus de la plaque supérieure (26) et un tronçon inférieur (32) s'étendant entre les plaques et placé dans une colonne entretoise respective, le tronçon inférieur (32) comportant une embase (40) d'appui sur un siège à portée tronconique (42) solidaire de la plaque inférieure (24) et étant soumis à l'action de moyens élastiques exerçant une force d'appui de l'embase sur le siège,
caractérisés en ce que les deux tronçons (30,32) de chaque guide constituent une cartouche monolithique insérable dans une colonne respective et en ce que le guide comprend de plus un capot (76) de réception du tronçon supérieur, fixé à la plaque supérieure (26), sur lequel prennent appui lesdits moyens élastiques (78,78a,88,88a).

2. Equipements internes selon la revendication 1, caractérisés en ce que ladite cartouche comporte une plaque haute (70) soumise à l'action des moyens élastiques.

3. Equipements internes selon la revendication 2, caractérisés en ce que la cartouche comporte un squelette ayant, en plus de la plaque haute et de l'embase (40), des longerons verticaux (38), des plaques transversales (44) de guidage discontinu des crayons de grappe et des fourreaux et tubes fendus (52) de guidage continu des crayons dans la partie basse du tronçon inférieur (32).

4. Equipements internes selon la revendication 2 ou 3, caractérisés en ce que le capot est fermé par une plaque de logement (74) dans laquelle coulisse un centreur (72) solidaire de la plaque haute (70).

5. Equipements internes selon la revendication 4, caractérisés en ce que le centreur (72) est constitué par un fourreau présentant une collerette (80) d'appui d'un ressort (78) constituant les moyens élastiques, ledit ressort étant emprisonné par un écrou (82) vissé dans la plaque de logement (74).

6. Equipements internes selon la revendication 5, caractérisés en ce que le centreur (72) s'appuie sur la plaque (70) par l'intermédiaire d'un anneau (84) vissé de façon ajustable sur un filetage du centreur.

7. Equipements internes selon la revendication 4, caractérisés en ce que les moyens élastiques comprennent plusieurs jeux identiques régulièrement répartis autour de l'axe du guide et intégrés dans la plaque haute (70).

8. Equipements internes selon la revendication 7, caractérisés en ce que chaque jeu comprend un ressort (88,88a) contenu dans une chambre (90) ménagée dans la plaque haute (70), comprimé entre le fond de la chambre et un plongeur (92) de transmission de la poussée de la plaque de logement (74).

9. Equipements internes selon la revendication 7 ou 8, caractérisés en ce que le ressort est constitué par un ressort hélicoïdal ou par un empilement de rondelles Belleville.

## Claims

1. Upper internal equipments for a nuclear reactor, having a lower plate (24) formed with outlet openings for the coolant leaving the core, an upper plate (26), spacer columns (28) connecting the plates and cluster guides for control clusters vertically displaceable between a position in which they are inserted in the core and a position in which they are out of the core, at least some of said guides each having a top length (30) projecting above the upper plate (26) and a bottom length (32) extending between the plates and placed in a respective spacer column, the bottom length (32) including a support base (40) bearing against a frustoconical seat (42) fast with the lower plate (24) and being subjected to the action of resilient means exerting a force that urges the support base against the seat,
characterized in that the two lengths (30, 32) of each said cluster guide constitute a unitary cartridge insertable in a respective column and in that the guide further includes an external casing (76) receiving the top length, fixed to the upper plate (26) and constituting abutment means for said resilient means (78, 78a, 88, 88a).

2. Internal equipments according to claim 1, characterized in that said cartridge includes a highest plate (70) subjected to the action of the resilient means.

3. Internal equipments according to claim 2, characterized in that the cartridge includes a framework which comprises, in addition to the highest plate and the support base (40), vertical longitudinal members (38), cross plates (44) providing discontinuous guidance of the control rods and split sleeves and tubes (52) for providing continuous guidance of the rods in the low portion of the bottom length (32).

4. Internal equipments according to claim 2 or 3, characterized in that the casing is closed by a reception plate (74) slidably receiving centering means (72) secured to the plate (70).

5. Internal equipments according to claim 4, characterized in that the centering means (72) is a bush having a flange (80) bearing against a spring (78) constituting the resilient means, said spring held captive by a nut (82) screwed into the reception plate (74).

6. Internal equipments according to claim 5, characterized in that the centering means bears on the plate (70) via a ring (84) which is adjustably screwed on a thread of said centering means.

7. Internal equipments according to claim 4, characterized in that the resilient means comprises a plurality of identical sets uniformly distributed around the axis of the guide and accommodated in the highest plate (70).

8. Internal equipments according to claim 7, characterized in that each set comprises a spring (88, 88a) contained in a chamber (90) formed in the highest plate (70) and compressed between an end wall of the chamber and a plunger (92) for transmitting thrust from the reception plate (74).

9. Internal equipments according to claim 7 or 8, characterized in that the spring is constituted by a helical spring or by a stack of Belleville washers.

## Patentansprüche

1. Obere Kernreaktorinneneinbauten mit einer unteren Platte (24), durch welche Austrittsöffnungen für das Kühlmittel aus dem Kern führen, einer oberen Platte (26), Stützsäulen (28), welche die Platten verbinden, und Steuerstabbündelführungen, die für Steuerstabbündel bestimmt sind, die sich vertikal zwischen einer Position, in der sie in den Kern eingebaut sind, und einer Position, in der sie aus diesem herausgenommen sind, bewegen lassen, wobei zumindest bestimmte dieser Führungen jeweils einen oberen Abschnitt (30) aufweisen, der über die obere Platte (26) hinaussteht, und einen unteren Abschnitt (32), der sich zwischen den Platten erstreckt und in einer entsprechenden Stützsäule angeordnet ist, wobei der untere Abschnitt (32) eine Fußfläche (40) zur Auflage auf einem Sitz mit kegelstumpfförmiger Auflagefläche (42) aufweist, die fest mit der unteren Platte (24) verbunden ist und der Kraft elastischer Elemente ausgesetzt ist, welche einen Auflagedruck der Fußfläche auf den Sitz ausüben,
dadurch gekennzeichnet, daß die beiden Abschnitte (30, 32) jeder Führung eine monolithe Hülse bilden, die in eine entsprechende Säule eingeführt werden kann, sowie dadurch, daß die Führung außerdem mehr als einen Aufsatz (76) zur Aufnahme des an der oberen Platte (26) befestigten oberen Abschnitts aufweist, auf dem die elastischen Elemente (78, 78a, 88, 88a) aufliegen.

2. Inneneinbauten nach Anspruch 1, dadurch gekennzeichnet, daß die Hülse eine Oberplatte (70) aufweist, auf welche die Kraft der elastischen Elemente wirkt.

3. Inneneinbauten nach Anspruch 2, dadurch gekennzeichnet, daß die Hülse ein Skelett umfaßt, das außer der Oberplatte und der Fußfläche (40) vertikale Längsträger (38) aufweist, quer verlaufende Platten (44) zur diskontinuierlichen Führung der Brennelementbündel und der Hüllen und gespaltene Rohre (52) zur kontinuierlichen Führung der Brennelemente im unteren Bereich des unteren Abschnitts (32).

4. Inneneinbauten nach Anspruch 2 oder 3, dadurch gekennzeichnet, daß der Aufsatz durch eine Aufnahmeplatte (74) verschlossen ist, in welcher ein Zentrierer (72) gleitet, der fest mit der Oberplatte (70) verbunden ist.

5. Inneneinbauten nach Anspruch 4, dadurch gekennzeichnet, daß der Zentrierer (72) aus einer Hülle mit einem Kragen (80) zur Auflage einer Feder (78) besteht, welche die elastischen Elemente bildet, wobei die Feder durch eine Mutter (82) festgesetzt ist, die in die Aufnahmeplatte (74) geschraubt ist.

6. Inneneinbauten nach Anspruch 5, dadurch gekennzeichnet, daß der Zentrierer (72) auf der Platte (70) mittels eines Rings (84) aufliegt, der verstellbar auf ein Gewinde des Zentrierers geschraubt ist.

7. Inneneinbauten nach Anspruch 4, dadurch gekennzeichnet, daß die elastischen Elemente mehrere identische Sätze umfassen, die gleichmäßig um die Achse der Führung verteilt und in die Oberplatte (70) integriert sind.

8. Inneneinbauten nach Anspruch 7, dadurch gekennzeichnet, daß jeder Satz eine Feder (88, 88a) aufweist, die in einer in der Oberplatte (70) vorgesehenen Kammer (90) enthalten ist und zwischen dem Boden der Kammer und einem Stößel (92) zusammengedrückt wird, der den Druck der Aufnahmeplatte (74) überträgt.

9. Inneneinbauten nach Anspruch 7 oder 8, dadurch gekennzeichnet, daß die Feder aus einer Spiralfeder oder gestapelten Tellerfedern besteht.
